# EUROPEAN PATENT SPECIFICATION

(11) **EP 0 566 419 B1**
(45) Date of publication and mention of the grant of the patent: **29.10.1997**
(21) Application number: 93302950.6
(22) Date of filing: 16.04.1993
(51) Int. Cl.: C10L 5/46

(54) **Method of making refuse derived fuels**
Verfahren zur Herstellung von Brennstoff aus Abfall
Procédé de fabrication de combustible dérivé de déchets

(30) Priority: 16.04.1992 GB 9208479
(43) Date of publication of application: 20.10.1993
(73) Proprietor: CPIS LIMITED, London SW7 1DE (GB)
(72) Inventor: Azegami, Muneo, Dr., Kamura-Ken (JP); Chalabi, Raad, Dr., London, SW7 (GB)
(74) Representative: Howden, Christopher Andrew

(56) References cited:
- WO-A-84/00976
- CH-A- 609 660
- CH-A- 665 785
- DE-A- 3 226 798
- DE-A- 3 609 117
- DE-A- 3 831 734
- FR-A- 784 344
- US-A- 4 898 615

## Description

In the majority of countries today, waste, and particularly domestic waste, (herein also referred to as refuse), is disposed of in dump sites (tips) and/or is incinerated at high cost. A major problem arising in disposal of waste by dumping waste at tips is that because of the scarcity of suitable land and the environmental problems associated with such sites, it has become practically impossible in nearly all the developed countries to obtain permits for the construction and operation of new tip sites. As regards incineration, the key problem is that waste is currently being burned with a low energy conversion rate and substantial ash residues. Moreover, the high emissions resulting from incinerating the waste demand expensive gas treatment installations at each incineration site.

In recent years, the production of refuse derived fuel (herein referred to as RDF) has become an acceptable approach to waste management. In the current processes for making RDF the waste stream is first stripped of its metal and glass components, which components may make up from 10 to 25% of the whole depending on the country under consideration. The resultant waste stream is then granulated and shredded, and subsequently dried, enabling the end product to be used as a fuel with a high calorific value and lower ash production, as compared with straightforward incineration of waste. The basic limitation to this approach to date has been that the resulting fuel is still biologically active, and therefor it is not practical for it to be stored or transported to the areas where it is needed as a fuel.

The strategic ecological thinking behind the present invention is the recognition that waste is produced everywhere, whereas its utilisation as a fuel is preferred in certain locations. Therefore, its transportability to these locations is critical. As an example, if RDF becomes transportable and storable, then waste generated in one region or sector can be ecologically transported for example to a cement plant, or coal-operated electricity generating plant, in another region. Under all circumstances, the stabilised RDF could then be either burned alone or co-fired with other fuels, thus ensuring its best utilisation at locations where it is needed. Moreover, if waste from several regions is transported in this way, one centrally located energy generating plant can consume the waste produced in several different regions where waste is normally not collectively managed.

There is a number of RDF making plants which are today operational, particularly in the United States of America, all of which plants suffer problems in relation to the storability and transportability of their end product, as highlighted above. There have been in recent years various proposals according to which lime (calcium oxide) is added to the waste in the RDF manufacturing process prior to the drying operation, to impart biological inertness and storability to the product. Few operational plants today are adopting that concept, because the reaction necessary between the lime and the solid waste is not, in practice, satisfactorily achieved. The processes proposed all are based on a standard blending operation of the lime with the waste stream.

A further complication in RDF production is that waste in many countries, such as Japan, has a high moisture content, so that it is very difficult to shred, granulate and pelletise under standard RDF making processes.

This invention is intended to address the limitations of the existing RDF making approach and to provide an improved method of making RDF which substantially enhances the properties of the resultant fuel, particularly in terms of its biological inertness, and rigidity, so that the RDF produced is easily stored and transported.

In accordance with the invention, there is provided a method of making a fuel from municipal refuse, comprising comminuting the refuse, mixing the refuse with an additive containing calcium oxide and forming the product into pellets, characterised in that said additive includes, in addition to calcium oxide, a calcium based and/or sodium based bentonite, in that after mixing the refuse with the additive, the additive is allowed to react with the refuse, and thereafter the resultant material is formed into pellets and said pellets are subsequently dried in an atmosphere containing carbon dioxide.

A preferred embodiment of the invention is described below with reference to the accompanying schematic flow chart.

In a preferred embodiment, domestic refuse is received at a processing plant from various despatch locations. The received waste is then introduced into a receiving pit, indicated at 10. A quantity of the additive, described above and exemplified in detail below, is added to the refuse in the pit 10 to ensure an initial stabilisation of the refuse and therefore to control the smell, etc. The refuse is then removed from the pit by mechanical means, such as a crab, conveyor belt, or moving platforms, into a trommel 20 with an inner rotating screen, or into a series of such trommels, allowing any metal articles or fragments, such as batteries, etc. of small size, to be removed at an early stage of the process. The apparatus includes appropriate additional devices (not shown) for removing metal and glass at this stage.

The waste stream is then introduced into a primary crusher 30 to reduce it to a predetermined particle size, and a further metal/glass separation process is applied to the crushed waste, as indicated schematically at 40. The resultant crushed waste, further stripped of metal and glass, is now introduced to a secondary granulator/shredder 50, for a further size reduction. In this second phase, and uniquely for this process, additional quantities of the additive referred to above are introduced into the waste in the secondary crusher 50 to ensure that the intended chemical reaction between the additive and the organic waste proceeds.

The output of this phase of the process, i.e. the treated, shredded waste after it leaves the secondary granulator/shredder 50 is then fed into a waste reactor 60, described below, in which, under controlled conditions, further quantities of the additive are added in order to maximise the reaction between the waste and the additive.

In this waste reactor 60, the reaction between the waste and the additive is brought to a high degree of completion. It must be understood that domestic waste, as received, is a heterogeneous composite containing proteins, fat, sugar, cellulosics and plastics. This organic mixture, when attacked by the additive under the operational conditions of the waste reactor and within the designed parameters of that reactor, will be almost completely hydrated. It is believed that the additive attacks the majority of the carbon nitrogen bonds in the waste and strips away the nitrogen from the molecular structure of the organic waste stream, and by doing so eliminates the sites for bacterial attack which are normally present in the waste. Moreover, this method of addition of the additive under strong mechanical agitation and at various points in the RDF making process as described earlier, and particularly the addition of the additive at the granulator/shredder phase 50 allows the heterogeneous waste to become more homogeneous. This homogeneity is a consequence of the chemical reaction between the additive and the waste. This chemical reaction is enhanced by the mechanical action of the crushers and granulators and dramatically enhanced by the operational conditions and system design of the waste reactor 60.

The conditions in the waste reactor are intended to enhance the reaction between the waste and the additive. That reaction is sensitive to several key parameters, namely (a) the moisture content of the waste, (b) the temperature at which the reaction takes place, (c) the homogeneity of the waste/additive mix, (d) the pH of the waste stream. All these variables are fully controlled in the waste reactor.

The output from the waste reactor 60 is then processed mechanically in an apparatus 70 to produce pellets of defined geometrical shape. This is achieved by using pelletising presses or other mechanical means that will transform the shredded treated waste to separate pellets.

The reaction between the additive and the waste in the granulator/shredder 50 will achieve up to 70% of the reaction, and in the waste reactor 60 the reaction will reach up to 90% completion. This implies that the waste becomes more homogeneous and easier to process. Therefore, as a consequence, the pelletisation process, in apparatus 70, is less energy and time-consuming than in existing RDF making processes. This has a favourable effect on the economics of the RDF making process.

The pellets are then introduced into a drier 80 using hot air which is rich in carbon dioxide. This carbon dioxide results from conventional combustion of fuel, such as LPG, which is used to heat the air for the drying operation. The pellets are dried in this air/carbon dioxide mixture at a temperature ranging from 105°C to 185°C and for period of from 15 minutes to 30 minutes, to drive out residual moisture from the pellets, thus reducing their moisture content to between 1% and 5% by weight. The nature of the additive employed and the drying mechanism, particularly the presence of carbon dioxide, implies that under these conditions, each treated pellet will have a hard outer layer encapsulating a quantity of reacted waste and additive. It is this end product which is the fuel.

The utilisation of the additive allows the dried pellets, even if they have a moisture content as high as 5%, to be biologically inert.

The above-described process embodying the invention, which is a continuous process, allows the conversion of the heterogeneous waste stream into a homogeneous reacted product with a calcium carbonate outer shell and nearly fully carbonized inner core. The reaction is achieved in all the phases of the process in the following manner.
(a) At the granulation/shredding phase 50, the reaction proceeds up to 70% completion.
(b) At the waste reactor phase 60, the reaction is complete up to 90%.
(c) At the pelletising phase 70, the reaction proceeds up to 95% completion.
(d) At the drying phase 80 the reaction reaches 100% completion.

The resulting RDF is then transported to its utilisation destination.

As described above, important elements in the preferred embodiment of the invention are the composition of the additive utilised in the process and its method of addition, i.e. the multifeed approach, where the additive is added at the storage pit 10, the granulator/shredder 50 and the waste reactor. The nature and mode of operation of the waste reactor is also significant.

The additive that is utilised in the process is a composite mixture of calcium oxide (lime), a calcium based and/or sodium based bentonite, and a hydrocarbon starch binder such as a blend of D-glucose and C-mannose. These components when blended correctly into ratios by weight ranging from 0 to 30% for the starch binder, 45 to 80% for the calcium oxide, and 45% to 20% for the bentonite, will act in a synergistic manner to impart the desired properties on the process and the end product, as described earlier.

The calcium oxide under the wet/moisture conditions of the waste attacks the carbon-nitrogen bonds, and the hydroxyl groupings, in the molecular structure of the waste, the reaction in question being an acid/base reaction. The rate of that reaction is very much dependent on the pH of the waste stream; the higher the pH, the higher is the rate of the reaction. Also the reaction rate depends on the temperature at which the reaction takes place. Thus, there is a dramatic increase in the reaction rate as the temperature in the waste increases from 60°C to 90°C. The importance of the presence of the bentonite is that it entraps the organic fatty acids present in the waste composite, thus causing a localised increase in pH and hence accelerating the calcium oxide attack on the waste stream.

The additive as stated earlier is preferably added to the waste at various points of the process namely the pit 10, the shredder/granulator 50 and the waste reactor 60. In the case of the pit the level of addition is between 0% - 2.0% of the weight of the waste; in the case of the crusher the addition level is between 1% and 5% of the weight of the waste, and in the case of the waste reactor, the addition level is between 0% and 5% of the weight of the waste. Taking all additions into consideration therefore the total addition of the additive to the waste is between 2% and 7% of the weight of the waste. The additive referred to may be added to the refuse during or in advance of transportation of the refuse to the treatment plant instead of, or in addition to being added to the storage pit 10 at the treatment plant. Such addition of the additive serves to control the biological degradation of the refuse during this stage, thus dramatically reducing the offensive odour resulting from the normal decomposition or decay of the refuse.

Examples of formulations of the additive successfully used to manufacture refuse derived fuel using the process of the invention are set out below.

| | | % by weight |
|---|---|---|
| (1) | Calcium oxide (Lime) = | 50 |
| | Calcium Bentonite = | 45 |
| | Starch = | 5 |
| (2) | Calcium oxide = | 50 |
| | Calcium Bentonite = | 50 |
| | Starch = | 0 |

As indicated above, the additive is preferably added at various points of the process, for example in the pit, at the granulation/shredding phase and at the waste reactor. The dosage is adjusted at each of these feed points to ensure the maximum reaction possible between the waste and the additive at each of the phases in which it is added. The total addition levels are a function of the selected additive composition and could vary from 2.6% up to 7% by weight of the waste being processed.

The conditions under which the reaction between the additive and the waste is maximised requires the use of the waste reactor which is a key design feature of the process.

Since waste is a variable raw material, whose composition and rate of degradation is a function of time, temperature and environmental conditions and since the desired reaction between waste and the additive is sensitive to many parameters, the waste reactor is needed to ensure the conversion of the organic waste into a biologically inert product. The use of the waste reactor enables the following parameters to be controlled in the process.
(a) The concentration of additive in the waste and its homogeneous interaction within the waste.
(b) The moisture content of the waste.
(c) The temperature at which the waste is made to react with the additive.
(d) The pH conditions under which the reaction takes place.
(e) The residence time in the waste reactor.

The waste reactor 50 comprises two compartments. The first compartment which receives the treated waste from the secondary granulator/shredder has the following features.
(a) It allows mechanical agitation of the waste.
(b) It allows the addition of additional quantities of additive.
(c) It allows the addition and/or removal of steam.
(d) It allows the waste to be heated.
(e) It allows all the above to be done in an interactive manner.

The residence time of the waste in the first compartment of the waste reactor under those carefully controlled conditions is critical to the successful reaction between the additive and the waste. That compartment of the waste reactor is therefore designed to place the treated waste stream under the ideal conditions for the reaction between the additive and the waste to reach its optimum level in that phase. The waste then feeds from this first compartment of the waste reactor to the second compartment and within that second compartment and for a short residence time, the reaction between the additive and the waste reaches 90% completion.

The first compartment of the waste reactor is generally a cubical, rectangular, or cylindrical container with rotary blades therein to allow the uniform blending of the additive into the waste. This compartment has inlets to allow the addition of steam and additive to the waste and an outlet or outlets to allow the homogenised waste to feed into the second compartment of the waste reactor. This second compartment is a horizontal cylindrical tube with a single or twin screw feeder. The waste spends a further residence time in this second compartment whilst being subjected to the shearing action of the screw or screws before being fed, as the output from said second compartment, into a densifying press or pelletiser 70.

As an example, the temperature conditions in the first compartment of the waste reactor to maximise the rate of reaction between the additive and the waste should be between 60 and 80°C, the moisture content being between 30 and 55% by weight, and the pH being between 10 and 12. The waste should have a residence time in this first compartment of between 20 and 60 minutes and a residence time in the second compartment of the waste reactor of between 5 and 20 minutes.

As an example, with a particular waste stream, a 90% reaction has been achieved between the waste and the additive under the following conditions:- temperature = 70°C; moisture content = 40%; pH = 11; residence time in the first chamber of the waste reactor = 30 minutes; and residence time in the second chamber of the waste reactor = 10 minutes.

Because of the type of additive used and the process conditions under which the additive is incorporated into the waste, the resultant refused derived fuel is biologically inert, is readily transportable and has a uniform calorific value allowing it to have an energy conversion rate of 30%, when used in an appropriate boiler. It also has lower emissions when burned in terms of chlorine gas, hydrogen chloride, sulphur dioxide and nitrogen oxide, in comparison to standard RDF. Moreover, a particularly low level of emissions can be achieved if the combustion unit utilised is an air-circulating, fluidised bed boiler.

The preferred process of the invention is capable of dramatically improving the production of RDF from domestic or analogous waste having a moisture content of up to 80%. The resultant fuel has superior qualities in terms of biological inertness, higher calorific value and lower emissions when burned, as compared with known refuse-derived fuels. The RDF produced by the process of the invention typically has a uniform calorific value of between 3500 kilocalories per kilogram and 4200 kilocalories per kilogram. The fuel is solid, biologically inert and readily storable and transportable.

The fuel produced may, for example, be burned in an electricity generating plant, or in the course of cement manufacture (providing also a possible utilisation route for the ash left after burning).

Another possible use for the pellets produced by the above-noted process, is as a fill or aggregate for concrete, particularly concrete used as a land reclamation medium. In this context, the pellets produced by the process, being substantially denser and more compact than the refuse from which they were produced, allow a substantially greater amount of refuse to be packed into a given land-fill volume (if the pellets are not destined for burning) whilst the biological inertness of the pellets removes the risk of physical (and chemical) instability of a land fill site based on such pellets. The combination of such pellets with a cement medium to form a species of concrete, produces a land-fill or land-reclamation medium which has excellent load bearing qualities and physical and chemical stability.

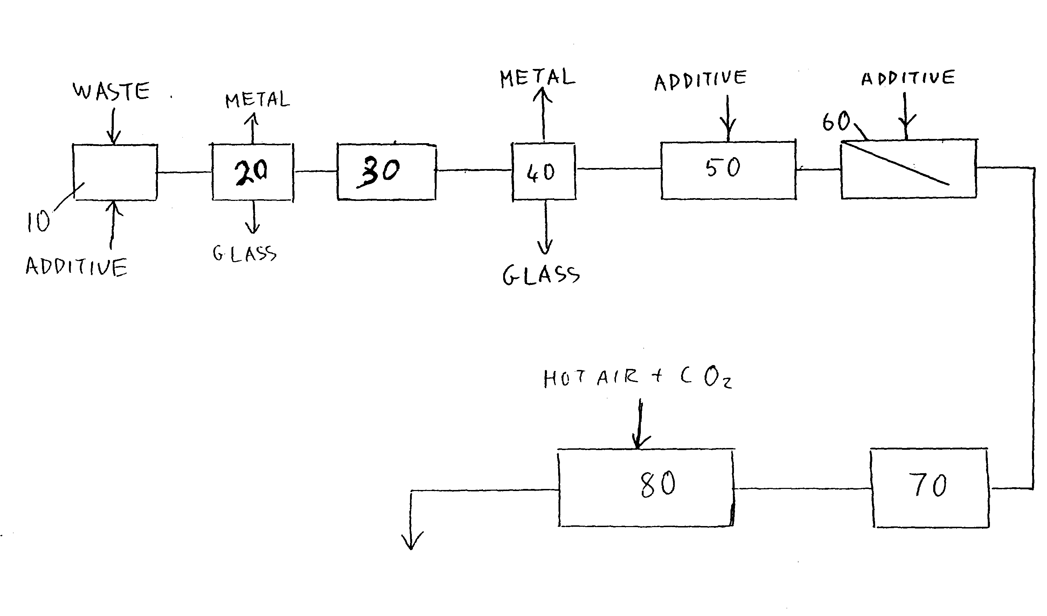

## Claims

1. A method of making a fuel from municipal refuse, comprising comminuting the refuse, mixing the refuse with an additive containing calcium oxide and forming the product into pellets, characterised in that said additive includes, in addition to calcium oxide, a calcium based and/or sodium based bentonite, in that after mixing the refuse with the additive, the additive is allowed to react with the refuse, and thereafter the resultant material is formed into pellets and said pellets are subsequently dried in an atmosphere containing carbon dioxide.

2. A method according to claim 1 wherein said additive includes starch as a binder.

3. A method according to claim 1 wherein after mixing the comminuted refuse with said additive, and before pelletising the product, the mixture is maintained for a predetermined time within a reactor, in which the moisture content, temperature and pH are controlled.

4. A method according to claim 3 wherein some of said additive is mixed with the refuse during comminution of the refuse and further said additive is mixed with the refuse in said reactor.

5. A method according to claim 3 or claim 4 wherein steam is supplied to said reactor.

6. A method according to claim 3 wherein the moisture content within a reactor compartment in said reactor is between 30% and 55% by weight, the temperature is between 60 and 80°C, the pH is between 10 and 12, and the time of residence of the mixture within said reactor compartment is from 20 to 60 minutes.

7. A method according to claim 3, 4 or 5 wherein said reactor comprises a first reactor compartment in which the mixture is subjected to the action of rotary blades and a second compartment which is a horizontal cylindrical tube with a single or twin screw feeder, the mixture being passed from said first compartment to said second compartment after a residence time in said first compartment, the moisture content within the first reactor compartment being between 30% and 55% by weight, the temperature in said first compartment being between 60° and 80° C, the pH in said first compartment being between 10 and 12, the residence time of the material in said first compartment being 20 to 60 minutes and the residence time in said second compartment being 5 to 20 minutes.

8. A method according to any of claims 3 to 7, wherein the reaction between the additive and the refuse reaches 70% completion in the comminuting phase, reaches 90% completion in the waste reactor, reaches 95% completion in the pelletising phase and reaches 100% in the drying phase.

9. A method according to any of claims 3 to 8 wherein untreated refuse is first dumped into a pit, where an initial quantity of said additive is added, the refuse and additive are then removed from the pit and metal articles or fragments, or glass are removed, after which the refuse is introduced into a primary crusher to reduce it to a predetermined particle size, the resultant crushed waste is further stripped of metal and glass and is thereafter introduced into a secondary crusher, where it is further reduced in particle size and where further said additive is mixed with the refuse before the refuse is passed to said reactor compartment.

10. A method according to claim 9 wherein up to 2% of said additive, by weight of the refuse, is added in said pit, from 1% to 5% of said additive, by weight of the waste, is added in the secondary crusher, and up to 5% by weight of the waste is added in said reactor, the total addition of said additive to the waste during the process being from 2% to 7% by weight of the refuse.

11. A method according to any of claims 3 to 10 wherein the waste is heated in the reactor.

12. A method according to claim 3 in which the refuse is crushed and/or shredded in an apparatus, whilst said additive is added thereto in a predetermined proportion and mixed therewith, subsequently the resulting material from the apparatus is transferred to a reactor in which said additive is added thereto in a further predetermined proportion whilst the material is stirred and blended under controlled conditions including controlled temperature and moisture content and pH and the resulting material is subsequently formed into said pellets.

13. A method according to any preceding claim wherein said additive comprises from 45% to 80% by weight of calcium oxide and from 20% and 50% by weight of bentonite.

14. A method according to claim 13 wherein said additive further includes up to 30% by weight of starch.

## Patentansprüche

1. Verfahren zum Verbrennen von Haushaltsmüll, bei dem der Müll zerkleinert wird, mit einem Additiv, das Kalziumoxid enthält, gemischt wird, und das Produkt zu Pellets geformt wird, dadurch gekennzeichnet, daß das besagte Additiv zusätzlich zu Kalziumoxid ein kalzium- und/oder natriumbasiertes Bentonit enthält, wobei man nach dem Mischen des Mülls mit dem Additiv das Additiv mit dem Müll reagieren läßt und anschließend das resultierende Material zu Pellets formt, die anschließend in einer kohlendioxidhaltigen Atmosphäre getrocknet werden.

2. Verfahren nach Anspruch 1, dadurch gekennzeichnet, daß das Additiv Stärke als Bindemittel enthält.

3. Verfahren nach Anspruch 1, dadurch gekennzeichnet, daß nach dem Mischen des zerkleinerten Mülls mit dem Additiv und vor dem Pelletisieren des Produkts die Mischung während einer vorbestimmten Zeitspanne in einem Reaktor gehalten wird, in dem der Feuchtigkeitsgehalt, die Temperatur und der pH-Wert gesteuert werden.

4. Verfahren nach Anspruch 3, dadurch gekennzeichnet, daß eine gewisse Menge des Additivs während des Zerkleinerns des Mülls mit dem Müll gemischt wird und daß weiteres Additiv mit dem Müll in dem genannten Reaktor vermischt wird.

5. Verfahren nach Anspruch 3 oder 4, dadurch gekennzeichnet, daß dem Reaktor Dampf zugeführt wird.

6. Verfahren nach Anspruch 3, dadurch gekennzeichnet, daß der Feuchtigkeitsgehalt innerhalb einer Reaktorkammer in dem genannten Reaktor zwischen 30 und 55 Gew.-% beträgt, die Temperatur zwischen 60 und 80°C, der pH-Wert zwischen 10 und 12 und die Verweilzeit der Mischung innerhalb der Reaktorkammer zwischen 20 und 60 Minuten liegt.

7. Verfahren nach Anspruch 3, 4 oder 5, dadurch gekennzeichnet, daß der Reaktor eine erste Reaktorkammer aufweist, in der die Mischung der Wirkung rotierender Schaufeln ausgesetzt ist, und eine zweite Kammer aufweist, die aus einem horizontalen, zylindrischen Rohr mit einem Einzel- oder Doppelschraubenförderer besteht, wobei die Mischung nach einer Verweilzeit in der ersten Kammer aus der ersten Kammer in die zweite Kammer weitergeleitet wird, der Feuchtigkeitsgehalt innerhalb der ersten Reaktorkammer zwischen 30 und 55 Gew.-% beträgt, die Temperatur in der ersten Kammer zwischen 60° und 80°C, der pH-Wert in der ersten Kammer zwischen 10 und 12, die Verweilzeit des Materials in der ersten Kammer zwischen 20 und 60 Minuten und die Verweilzeit in der zweiten Kammer zwischen 5 und 20 Minuten beträgt.

8. Verfahren nach einem der Ansprüche 3 bis 7, dadurch gekennzeichnet, daß die Reaktion zwischen Additiv und Müll in der Zerkleinerungsphase einen Reaktionsgrad von 70 %, im Abfallreaktor 90 %, in der Pelletisierungsphase 95 % und in der Trocknungsphase 100 % erreicht.

9. Verfahren nach einem der Ansprüche 3 bis 8, dadurch gekennzeichnet, daß unbehandelter Müll zunächst in eine Grube gekippt wird, wo eine Anfangsmenge des Additivs zugegeben wird, Müll und Additiv dann aus der Grube entfernt werden und Metallgegenstände oder -bruchstücke oder Glas entfernt werden, wonach der Müll in einen primären Zerkleinerer eingeleitet wird, um ihn auf eine vorbestimmte Partikelgröße zu zerkleinern, wobei der resultierende, zerkleinerte Müll weiter von Metall und Glas befreit wird und danach in einen sekundären Zerkleinerer eingeleitet wird, wo die Partikelgröße weiter reduziert wird und eine weitere Menge des Additivs mit dem Müll gemischt wird, bevor der Müll in die besagte Reaktorkammer weitergeleitet wird.

10. Verfahren nach Anspruch 9, dadurch gekennzeichnet, daß bis zu 2 %, bezogen auf das Gewicht des Mülls, an Additiv in der Grube zugesetzt werden, 1 bis 5 % Additiv, bezogen auf das Gewicht des Mülls, im sekundären Zerkleinerer zugesetzt werden, und bis zu 5 %, bezogen auf das Gewicht des Mülls, in dem Reaktor hinzugefügt werden, wobei die Gesamtzugabe des Additivs zu dem Müll während des Verfahrens zwischen 2 und 7 % beträgt, bezogen auf das Gewicht des Mülls.

11. Verfahren nach einem der Ansprüche 3 bis 10, dadurch gekennzeichnet, daß der Müll in dem Reaktor erwärmt wird.

12. Verfahren nach Anspruch 3, dadurch gekennzeichnet, daß der Müll in einer Vorrichtung zerkleinert und/oder geshreddert wird, während das Additiv in einem vorbestimmten Verhältnis zugegeben und damit vermischt wird, wonach das resultierende Material aus der Vorrichtung zu einem Reaktor geleitet wird, in dem das Additiv in einem weiteren, vorbestimmten Verhältnis zugesetzt wird, während das Material unter gesteuerten Bedingungen gerührt und gemischt wird, wobei Temperatur, Feuchtigkeitsgehalt und pH-Wert gesteuert werden und wonach das resultierende Material zu den genannten Pellets umgeformt wird.

13. Verfahren nach einem der vorangehenden Ansprüche, dadurch gekennzeichnet, daß das Additiv zwischen 45 und 80 Gew.-% Kalziumoxid und zwischen 20 und 50 Gew.-% Bentonit enthält.

14. Verfahren nach Anspruch 13, dadurch gekennzeichnet, daß das Additiv weiter bis zu 30 Gew.-% Stärke enthält.

## Revendications

1. Un procédé de fabrication de combustible dérivé de déchets urbains, comprenant le broyage, le mélange des déchets avec un additif contenant de l'oxyde de calcium et la formation du produit en boulettes, caractérisé en ce que ledit additif comprend, en plus de l'oxyde de calcium, de la bentonite à base de sodium et/ou de calcium, en ce que, après mélange des déchets avec l'additif, l'additif est mis à réagir avec les déchets, et qu'ensuite la matière résultante est formée en boulettes et les boulettes sont ensuite séchées dans une atmosphère contenant du dioxyde de carbone.

2. Un procédé selon la revendication 1, dans lequel ledit additif comprend de l'amidon comme liant.

3. Un procédé selon la revendication 1, dans lequel, après mélange des déchets broyés avec ledit additif, et avant réduction du produit en boulettes, le mélange est maintenu pendant un temps prédéterminé dans un réacteur, dans lequel la teneur en humidité, la température, et le pH sont contrôlés.

4. Un procédé selon la revendication 3, dans lequel une partie dudit additif est mélangé avec les déchets pendant le broyage des déchets et puis ledit additif est mélangé avec les déchets dans ledit réacteur.

5. Un procédé selon la revendication 3 ou la revendication 4, dans lequel de la vapeur est fournie audit réacteur.

6. Un procédé selon la revendication 3, dans lequel la teneur en humidité à l'intérieur d'un compartiment de réacteur est entre 30 et 55 % en poids, la température est entre 60 et 80°C, le pH est compris entre 10 et 12, et le temps de séjour du mélange à l'intérieur dudit compartiment de réacteur est compris de 20 à 60 minutes.

7. Un procédé selon la revendication 3, 4, ou 5, dans lequel ledit réacteur comprend un premier compartiment de réacteur dans lequel le mélange est soumis à l'action de lames rotatives et un second compartiment qui est un tube cylindrique horizontal avec un distributeur à vis simple ou double, le mélange étant passé dudit premier compartiment audit second compartiment après un temps de séjour dans ledit premier compartiment, la teneur en humidité à l'intérieur du premier compartiment du réacteur étant entre 30 et 55 % en poids, la température dans ledit premier compartiment étant entre 60 et 80°C, le pH dans ledit premier compartiment étant entre 10 et 12, le temps de séjour de la matière dans ledit premier compartiment étant de 20 à 60 minutes et le temps de séjour dans ledit second compartiment étant de 5 à 20 minutes.

8. Un procédé selon l'une quelconque des revendications 3 à 7, dans lequel la réaction entre l'additif et les déchets atteint un achèvement à 70 % dans la phase de broyage, atteint un achèvement à 90 % dans le réacteur à déchets, atteint un achèvement à 95 % dans la phase de réduction en boulettes, et atteint un achèvement à 100 % dans la phase de séchage.

9. Un procédé selon l'une quelconque des revendications 3 à 8, dans lequel les déchets non traités sont d'abord déversés dans une fosse, où une quantité initiale de l'additif est ajoutée, les déchets et l'additif sont ensuite retirés de la fosse, et les articles ou fragments métalliques, ou du verre, sont ou est retiré(s), après quoi les déchets sont introduits dans un broyeur primaire pour les réduire en une taille de particule prédéterminée, les déchets broyés résultants sont en outre débarrassés du métal et du verre et puis introduits dans un broyeur secondaire, où ils sont de plus réduits en taille de particule, et où, en outre, ledit additif est mélangé avec les déchets avant que les déchets ne passent dans ledit compartiment de réacteur.

10. Un procédé selon la revendication 9, dans lequel jusqu'à 2 % dudit additif, en poids de déchets, sont ajoutés dans ladite fosse, de 1 à 5 % dudit additif, en poids de déchets, sont ajoutés dans le broyeur secondaire, et jusqu'à 5 % en poids de déchets sont ajoutés dans ledit réacteur, l'addition totale dudit additif aux déchets pendant le procédé étant de 2 à 7 % en poids des déchets.

11. Un procédé selon l'une quelconque des revendications 3 à 10, dans lequel les déchets sont chauffés dans le réacteur.

12. Un procédé selon la revendication 3, dans lequel les déchets sont broyés et/ou déchiquetés dans un appareil, tandis que ledit additif est ajouté à ceux-ci dans une proportion prédéterminée et mélangé avec ceux-ci, puis la matière résultante de l'appareil est transférée dans un réacteur dans lequel ledit additif est ajouté à celle-ci, dans une autre proportion prédéterminée, tandis que la matière est agitée et mélangée dans des conditions contrôlées, incluant la température et la teneur en humidité et le pH et la matière résultante est ensuite formée en boulettes.

13. Un procédé selon une quelconque revendication précédente, dans lequel ledit additif comprend de 45 à 80 % en poids d'oxyde de calcium et de 20 à 50 % en poids de bentonite.

14. Un procédé selon la revendication 13, dans lequel ledit additif comprend, en outre, jusqu'à 30 % en poids d'amidon.
